# EUROPÄISCHE PATENTSCHRIFT

(11) **EP 3 382 782 B1**
(45) Veröffentlichungstag und Bekanntmachung des Hinweises auf die Patenterteilung: **27.08.2025**
(21) Anmeldenummer: 18000215.6
(22) Anmeldetag: 06.03.2018
(51) Int. Cl.: H01M 6/38

(54) **AKTIVIERUNGSEINRICHTUNG FÜR EINE BATTERIE FÜR EINEN ELEKTRONISCHEN ZÜNDMECHANISMUS**
ACTIVATION DEVICE FOR A BATTERY FOR AN ELECTRONIC IGNITION MECHANISM
DISPOSITIF D'ACTIVATION POUR UNE BATTERIE POUR UN MÉCANISME D'ALLUMAGE ÉLECTRONIQUE

(30) Priorität: 23.03.2017 DE 102017002847
(43) Veröffentlichungstag der Anmeldung: 03.10.2018
(73) Patentinhaber: Diehl & Eagle Picher GmbH, 90552 Röthenbach (DE)
(72) Erfinder: Wich, Harald, DE - 91207 Lauf (DE); Hein, Roland, DE - 90453 Nürnberg (DE)
(74) Vertreter: Diehl Patentabteilung

(56) Entgegenhaltungen:
- JP-U- S57 135 074
- US-A- 2 918 514
- US-A- 3 169 084

## Beschreibung

Die Erfindung betrifft eine Aktivierungseinrichtung für eine Batterie für einen elektronischen Zündmechanismus, umfassend eine mit einem Elektrolyten gefüllte Ampulle sowie eine Einrichtung zum Zerbrechen der Ampulle.

Eine solche Aktivierungseinrichtung dient zum Aktivieren einer Batterie für einen elektronischen Zündmechanismus eines Geschosses, das über ein Waffenrohr verschießbar ist. Eine solche Aktivierungseinrichtung, wie vorstehend beschrieben, ist beispielsweise aus EP 1 467 423 A2 oder aus der JP S57 135074 U oder auch aus der US 2 918 514 A bekannt. Mit dem Verschießen wird die Aktivierungseinrichtung betätigt, so dass die Ampulle aufgebrochen wird und der Elektrolyt die benachbarten Batteriezellen galvanisch aktiviert.

Der Aktivierungsmechanismus, wie er beispielsweise auch aus EP 1 467 423 A2 bekannt ist, umfasst neben der Ampulle auch eine entsprechende Einrichtung zum Zerbrechen derselben. Hierzu ist die Ampulle auf einem vorzugsweise ringförmigen Lagerelement aufgelagert, das über wenige schmale Verbindungsstege mit einem Träger verbunden ist, der im Inneren des ringförmigen Lagerelements angeordnet ist, mitten also unterhalb der Ampulle positioniert ist. Wird nun das Geschoss verschossen, so wirkt beschleunigungsbedingt eine hohe Kraft auf die Ampulle und über diese auf das Lagerelement, was dazu führt, dass die Verbindungsstege abgeschert werden und die Ampulle freigegeben wird, so dass sie gegen den Träger schlägt, was zum Brechen der Ampulle und damit zur Aktivierung der Batterie führt. Um diese Aktivierung zu erwirken, ist eine "Auslöseschwelle" zu überschreiten, mithin also eine hinreichende Krafteinwirkung durch die Abschussbeschleunigung zu erzielen, damit die Verbindungsstege abgeschert werden und es zum Aufbrechen der Ampulle kommt.

Neben der bestimmungsgemäßen Aktivierung ab einem bestimmten Beschleunigungsniveau ist jedoch aus Sicherheitsgründen auch eine Nichtaktivierung in Fällen sicherzustellen, in denen es zwar zu einer Beschleunigung kommt, diese jedoch nicht gewollt ist, beispielsweise wenn das Geschoss zu Boden fällt. Auch hierbei kommt es mitunter zu einer beachtlichen Beschleunigung. Aus Sicherheitsgründen sollte also die "Auslöseschwelle" relativ hoch sein, demgegenüber wird jedoch oft eine relativ niedrige Auslöseschwelle gefordert, insbesondere wenn der Verschuss mit niedriger Abschussbeschleunigung erfolgt. Solche niedrigen Abschussbeschleunigungen liegen bei etwa dem 1000-2000-fachen der Erdbeschleunigung. Demgegenüber werden bei entsprechenden Falltests weit höhere Beschleunigungen auftreten.

EP 1 467 423 A2 begegnet diesem Problem durch eine entsprechend hoch ausgelegte Auslöseschwelle, in dem die Verbindungsstege derart ausgelegt werden, dass sie erst bei hoher Beschleunigung, z. B. dem 5000-fachen der Erdbeschleunigung abscheren. Das heißt, dass hier eine relativ hohe Auslöseschwelle realisiert wird. Eine solch relativ hohe Auslöseschwelle ist dort zu wählen, da die Impulsunterdrückungsfähigkeit der Scherverbindung relativ gering ist.

Der Erfindung liegt damit das Problem zugrunde, eine demgegenüber verbesserte Aktivierungseinrichtung anzugeben.

Zur Lösung dieses Problems ist erfindungsgemäß vorgesehen, dass die Einrichtung zum Zerbrechen ein Schnappfederelement umfasst, das bei Aufbringen einer beschleunigungsbedingten Kraft von einer ersten Form in eine zweite Form umschnappt.

Erfindungsgemäß umfasst die Einrichtung zum Zerbrechen ein seine Form wechselndes Schnappfederelement. Dieses ist im Ausgangszustand, wenn also keine Kraft auf die Aktivierungseinrichtung ausgeübt wird, in einer ersten Form in die Aktivierungseinrichtung integriert. Wenn jedoch eine beschleunigungsbedingt erzeugte, hinreichend hohe Kraft auf das Schnappfederelement wirkt, wechselt dieses seine Form und schnappt in die zweite Form um, wobei mit diesem Umschnappvorgang auch die Zerstörung der Ampulle und damit das Freisetzen des Elektrolyten einhergeht.

Über die mechanischen Eigenschaften des Schnappfederelements kann nun die "Auslöseschwelle" eingestellt werden, also das Kraftniveau und die Dauer der Krafteinwirkung festgelegt werden. Das heißt, dass das Schnappfederelement so ausgelegt werden kann, dass ein nur kurzzeitiger Kraftimpuls, wie er beispielsweise im Rahmen eines Falltests für nur wenige µs wirkt, nicht ausreichend ist, um den Schnappvorgang einzuleiten. Es kann hierbei zu einer leichten Einfederbewegung kommen, die jedoch nicht ausreicht, um umzuschnappen. Vielmehr kommt es nach Beendigung der kurzzeitigen Beschleunigung wieder zu einem Rückstellen, das heißt, dass das Schnappfederelement wieder in die erste Form zurückkehrt.

Erst wenn eine hinreichende, aus der Beschleunigung resultierende Kraft über eine ausreichende Zeit anliegt, kommt es zur Formänderung des Schnappfederelements, verbunden mit dem Zerbrechen der üblicherweise aus Glas bestehenden Ampulle. Das heißt, dass das Schnappfederelement ein mechanischer Integrator ist, der die Beschleunigungskraft über die Zeit integriert. Durch entsprechende Ausgestaltung des Schnappfederelements hinsichtlich seiner Federeigenschaften, der Dicke, der Geometrie etc. kann die Federkennlinie wie auch der Weg, der bis zum Erreichen des Umschnapppunktes zurückzulegen ist, eingestellt werden. Auf diese Weise kann mittels eines einfach und kostengünstig herstellbaren Schnappfederelements einerseits eine hinreichend niedrige Auslöseschwelle eingestellt werden, andererseits aber auch ein hinreichendes Maß an Sicherheit im Falle einer nicht ordnungsgemäß erfolgenden Beschleunigung erreicht werden.

Hinsichtlich der Integration des Schnappfederelements und damit der Funktion der Einrichtung zum Zerbrechen der Ampulle sind zwei Alternativen gegeben. Gemäß einer ersten Ausführungsalternative kann das Schnappfederelement ein die beschleunigungsbedingt bewegbare Ampulle tragendes Lagerelement sein. Bei dieser Ausgestaltung ist die Ampulle in einem entsprechenden Einrichtungsgehäuse beweglich angeordnet, kann also im Falle einer Beschleunigung bewegt werden. Bei ordnungsgemäßem Verschuss erfolgt diese Bewegung axial zur Beschleunigungsrichtung, also einer ausgezeichneten Beschleunigungsrichtung. Die Ampulle sitzt auf dem als Lagerelement dienenden Schnappfederelement auf. Kommt es verschussbedingt zu einer hinreichend starken und lang dauernden Beschleunigung, so schnappt das Schnappfederelement um, die Ampulle wird quasi freigegeben, die Abstützung fällt weg. Dies führt zum Aufbrechen der Ampulle, die an einem in der Aktivierungseinrichtung vorgesehenen Aufbrechelement, das bevorzugt unterhalb der Ampulle angeordnet ist, aufschlägt. Kommt es jedoch zu einer nicht ordnungsgemäßen Beschleunigung, beispielsweise im Rahmen eines Falltests, so kann die Ampulle gegebenenfalls auch etwas beschleunigungsbedingt bewegt werden, jedoch reicht die aus der Beschleunigung resultierende Kraft respektive Bewegung nicht aus, den Umschnappvorgang einzuleiten, es kommt allerhöchstens zu einer leichten Einfederbewegung des Lagerelements und nach Wegfall der Beschleunigung zu einer Rückstellung.

Zweckmäßigerweise kann das Schnappfederelement über ein weiteres Federelement vorgespannt werden, wobei dieses weitere Federelement die Ampulle gegen das Schnappfederelement spannt. Das heißt, dass, gesehen in Richtung der ausgezeichneten Beschleunigungsrichtung beim Verschuss, das zusätzliche Federelement oberhalb der Ampulle angeordnet ist, während das Schnappfederelement unterhalb der Ampulle, diese tragend, positioniert ist. Dieses Federelement dient als Druckelement. Auch über dieses zusätzliche Federelement, das natürlich auch der Fixierung der Ampulle dienen kann, kann des Weiteren das Auslösemoment eingestellt werden, da hierüber eine Vorspannung, also eine Basislast auf das Schnappfederelement definiert werden kann. Bevorzugt ist das an der Oberseite der Ampulle angreifende Federelement an einem die Ampulle oberseitig übergreifenden Bauteil abgestützt, zweckmäßigerweise einem entsprechenden Einrichtungsgehäuse oder Ähnlichem.

Als ein solches Federelement kann beispielsweise eine Schraubenfeder verwendet werden, auch ist ein elastischer Materialblock verwendbar, wobei diese Aufzählung nicht abschließend ist. Vorzugsweise ist das Federelement, egal welcher Ausgestaltung oder Geometrie, aus einem Kunststoffmaterial, also einem Elastomer oder Silikon, das auch in Schaumform vorliegen kann.

Die zweite zentrale Erfindungsalternative sieht vor, das Schnappfederelement oberhalb der Ampulle anzuordnen, wobei das Schnappfederelement ein beim Umschnappen von der ersten in die zweite Form an der Ampulle anschlagendes Aufbrechelement aufweist. Bei dieser Erfindungsausgestaltung ist die Ampulle positionsfest unterhalb des Schnappfederelements angeordnet, z. B. angeklebt. Das Schnappfederelement selbst wird beschleunigungsbedingt mit einer aus der Beschleunigung resultierenden Kraft belastet, die im Falle eines Falltests und des kurzzeitigen Beschleunigungsimpulses nicht ausreichend ist, den Umschnappvorgang einzuleiten, die aber bei einem regulären Verschuss und damit einer hinreichend langen und starken Beschleunigung ausreichend ist, den Umschnappvorgang zu erwirken. Das Schnappfederelement ändert seine Form und schnappt nach unten in Richtung der Ampulle. Hierbei schlägt ein an dem Schnappfederelement vorgesehenes Aufbrechelement gegen die Ampulle, die wie beschrieben üblicherweise aus Glas besteht, so dass sie zerbricht. Ein solches Aufbrechelement kann eine am Schnappfederelement vorgesehene Spitze, ein Kegel, ein Nippel oder eine sonstige Geometrie sein. Da der Umschnappvorgang mit Überwinden des Umschnapppunktes schlagartig erfolgt, mithin also das Schnappfederelement quasi explosionsartig in die zweite Form umschnappt, schlägt das Aufbrechelement auch mit hinreichender Kraft auf die Glasampulle, so dass diese zerbricht.

Dabei kann das Aufbrechelement am Schnappfederelement selbst ausgeformt sein, ist also integraler Bestandteil desselben. Alternativ ist es auch denkbar, das Aufbrechelement am Schnappfederelement zu befestigen, beispielsweise anzukleben oder anzuschweißen und Ähnliches. Selbstverständlich ist es auch denkbar, mehrere Aufbrechelemente am Schnappfederelement vorzusehen, mithin also an mehreren Positionen gegen die Glasampulle zu schlagen, um sie zu zerbrechen.

Weiterhin kann es zweckmäßig sein, wenn das Schnappfederelement mit einem Zusatzmasseelement versehen ist, das zusammen mit dem Schnappfederelement beschleunigbar ist. Diese Ausgestaltung ist zweckmäßig, wenn die Masse des Schnappfederelements im Einzelfall nicht ausreichend ist, auch bei starker Beschleunigung umzuschnappen, oder wenn über dieses Zusatzmasseelement die Auslöseschwelle weiter erniedrigt werden soll. Dabei kann das Zusatzmasseelement am Schnappfederelement angeklebt oder angeschweißt oder sonst wie befestigt sein. Alternativ dazu besteht natürlich auch die Möglichkeit, das Schnappfederelement als solches hinreichend massig zu dimensionieren.

Das Schnappfederelement selbst weist zweckmäßigerweise einen Mittelabschnitt sowie mehrere radial davon abstehende Federabschnitte auf, über die das Schnappfederelement an einer Wandung eines das Schnappfederelement umgebenden Bauteils abgestützt ist. Dieser Mittelabschnitt lagert beispielsweise die Ampulle gemäß der ersten beschriebenen Erfindungsalternative auf. In der zweiten Erfindungsalternative ist der Mittelabschnitt beispielsweise Träger für das oder die Aufbrechelemente.

Vom Mittelabschnitt stehen die Federabschnitte, die auch als Federarme bezeichnet werden können, radial ab. Mit diesen ist das Schnappfederelement an einem umgebenden Bauteil abgestützt, das zweckmäßigerweise eine ringförmig umlaufende oder mehrere lokale Aufnahmen für die Federabschnitte, die in die eine oder die mehreren Aufnahmen eingreifen, aufweist. Diese eine oder mehreren Aufnahmen stellen quasi Rastaufnahmen dar, in der oder denen die Federabschnitte oder Federarme unter Spannung eingeschnappt sind. Die Geometrie dieser Aufnahmen ist derart, dass sich die Federabschnitte oder Federarme belastungsbedingt verformen und bewegen können, so dass sie in die zweite Form schnappen können.

Bevorzugt sind drei oder mehr äquidistant um den Umfang des runden Mittelabschnitts verteilt angeordnete Federabschnitte vorgesehen, das heißt, dass eine Mehrpunktlagerung gegeben ist. Über die Anzahl der Federabschnitte kann wiederum Einfluss auf die Federeigenschaften genommen werden, wie auch über die Länge der Federelemente.

Das Schnappfederelement selbst ist bevorzugt aus Metall, insbesondere Federstahl, kann also als einfaches Stanzbauteil hergestellt werden. Denkbar ist aber auch eine Ausführung aus einem Polymermaterial, also aus Kunststoff.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung einer Aktivierungseinrichtung einer ersten Ausführungsform im unbelasteten Zustand,
- Fig. 2: eine Teilansicht der Aktivierungseinrichtung aus Fig. 1 mit Aufsicht auf das montierte Schnappfederelement,
- Fig. 3: eine vergrößerte Detailansicht des Schnappfederelements in seiner Befestigung an einem Bauteil der Aktivierungseinrichtung,
- Fig. 4: die Aktivierungseinrichtung aus Fig. 1 nach einer hinreichenden Beschleunigung unter Zerbrechen der Ampulle,
- Fig. 5: eine Prinzipdarstellung einer Aktivierungseinrichtung einer zweiten Ausführungsform mit oberhalb der Ampulle angeordnetem Schnappfederelement, und
- Fig. 6: die Aktivierungseinrichtung aus Fig. 5 nach einer hinreichenden Beschleunigung mit zerbrochener Ampulle.

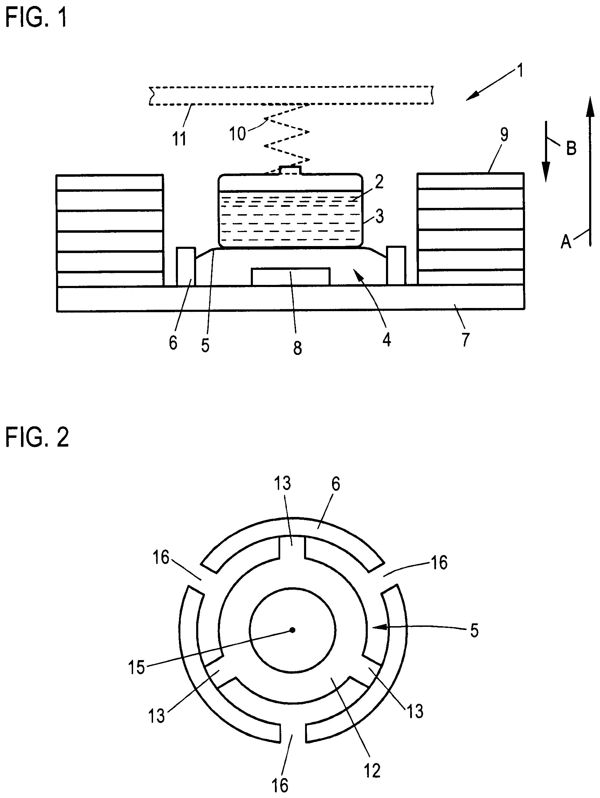

Fig. 1 zeigt eine erfindungsgemäße Aktivierungseinrichtung 1 für eine Batterie für einen elektronischen Zündmechanismus, umfassend eine mit einem Elektrolyten 2 gefüllte Ampulle 3, insbesondere aus Glas, die nach dem Befüllen mit dem Elektrolyten 2 zugeschmolzen ist. Vorgesehen ist des Weiteren eine Einrichtung 4 zum Zerbrechen der Ampulle 3. Die Einrichtung 4 umfasst zum einen ein Schnappfederelement 5, das an einem Bauteil 6 der Aktivierungseinrichtung, das beispielsweise an einem Träger 7 befestigt ist, angeordnet ist. Die Ampulle 3 ist auf dem Schnappfederelement 5 angeordnet, dieses dient also als Lagerelement. Unterhalb der Ampulle 3 respektive des ringförmigen Schnappfederelements 5 ist ein Aufbrechelement 8 angeordnet, auf das die Ampulle 3 aufschlägt, wenn das Schnappfederelement 5 beschleunigungsbedingt seine Form ändert und in eine zweite Form umschnappt.

Gezeigt ist des Weiteren eine stapelförmige Batteriezelle 9, die über den Elektrolyten 2 aktiviert werden kann, wenn die Ampulle 3 zerbrochen ist und der Elektrolyt 2 in der Aktivierungseinrichtung frei fließt.

Gezeigt ist des Weiteren gestrichelt ein optional vorsehbares Federelement 10, exemplarisch hier dargestellt als Schraubenfeder, das oberhalb der Ampulle 3 angeordnet ist und auf dieser oberseitig abgestützt ist. Das andere Ende des Federelements 10 ist an einem positionsfesten Bauteil, beispielsweise einem hier nur teilweise dargestellten Gehäuse 11 der Aktivierungseinrichtung 1 abgestützt. Über dieses Federelement 10 wird die Ampulle 3 gegen das Schnappfederelement 5 gespannt, dieses wird also etwas vorgespannt.

Fig. 2 zeigt eine vergrößerte Ansicht des Schnappfederelements 5. Dies ist im gezeigten Beispiel mit einem ringförmigen Mittelabschnitt 12 ausgeführt, von dem aus sich radial drei Federabschnitte 13 nach außen erstrecken, über die das Schnappfederelement 5 am Bauteil 6 gelagert ist. Der Mittelabschnitt 12 dient als der eigentliche Lagerabschnitt, auf dem die Ampulle 3 aufsitzt.

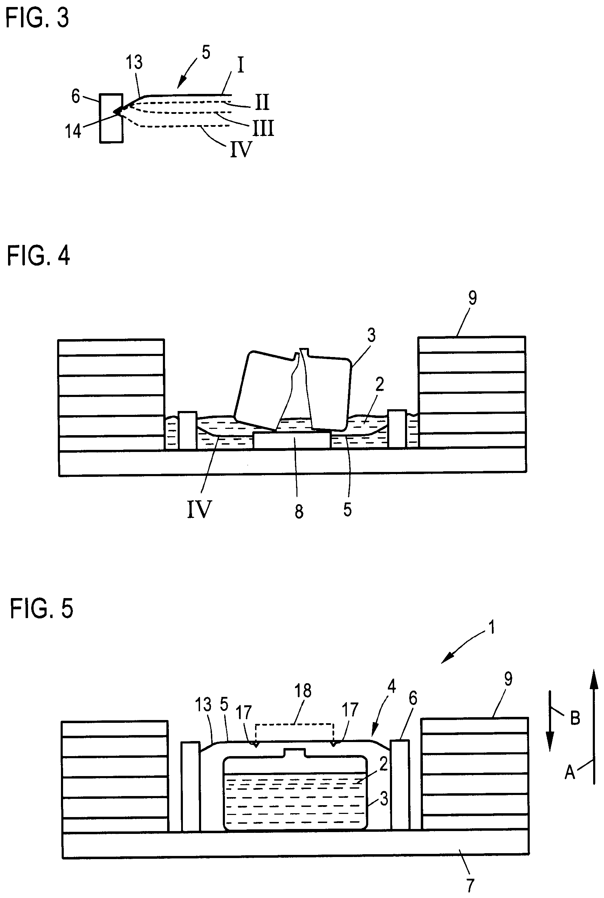

Im Bauteil 6 sind entsprechende Aufnahmen 14, siehe Fig. 3, ausgebildet, die hier als V-förmige Nuten ausgebildet sind. Der jeweilige Federabschnitt 13 greift in die Aufnahme 14 ein. Da das Schnappfederelement 5 im unbelasteten Zustand, bezogen auf die Enden der Federabschnitte 13, einen größeren Radius aufweist als das ringförmige Bauteil 6 im Bereich der Aufnahmen 14, kommt es zwangsläufig dazu, dass die Federabschnitte 13 einfedern respektive einbiegen, wie Fig. 3 deutlich zeigt.

In Fig. 3 ist ausgezogen die erste Form I dargestellt, in der das Schnappfederelement 5 quasi nach oben, also vom Aufbrechelement 8 weg, eingespannt ist.

Kommt es nun, wie Fig. 1 durch den Pfeil A zeigt, zu einer Beschleunigung in dieser Richtung, so wirkt zwangsläufig, wie durch den Pfeil B gezeigt ist, eine Kraft auf die Ampulle 3 nebst Elektrolyt 2 und damit auch auf das Schnappfederelement 5. Je nachdem, wie groß diese beschleunigungsbedingte Kraft ist und wie lange sie anliegt, bleibt das Schnappfederelement 5 entweder in der ersten Form oder wird leicht einfedern, wie durch die gestrichelte Linie II dargestellt ist. Wird nun die Beschleunigung beendet, was beispielsweise bei einem kurzen Beschleunigungsimpuls im Falle eines Falltests gegeben ist, so federt das Schnappfederelement 5 wieder zurück in die Ausgangsform I.

Wird jedoch das Geschoss, in dem die Aktivierungseinrichtung 1 verbaut ist, ordnungsgemäß verschossen, so findet eine lang anhaltende, hinreichend kräftige Beschleunigung statt. Das Schnappfederelement 5 federt noch stärker ein und erreicht den mit der gestrichelten Linie III exemplarisch dargestellten Umschnapppunkt. Ersichtlich sind die Federabschnitte 13 stark verformt. Wird die Beschleunigung respektive die Kraft über diesen Moment aufrechterhalten, so kommt es zum vollständigen, explosionsartigen Umschnappen in die in Fig. 3 mit der gestrichelten Linie IV dargestellte zweite Form. In dieser ist das Schnappfederelement 5 folglich nach unten geschnappt und verläuft quasi unterhalb des Aufbrechelements 8. Die Federabschnitte 13 liegen in den Aufnahmen 14 an deren unteren Rand an.

Fig. 4 zeigt eine Darstellung, in der eine solche ordnungsgemäße, ausreichende Beschleunigung durch einen Beschuss erfolgt ist. Ersichtlich ist das Schnappfederelement 5 in die zweite Form IV umgeschnappt. Das Aufbrechelement 8 durchgreift die zentrale Durchbrechung 15 des Mittelabschnitts 12. Durch dieses Umschnappen respektive die Formänderung des Schnappfederelement 5 bewegt sich folglich zwangsläufig auch die Ampulle 3 nach unten und schlägt, da vom Schnappfederelement 5 nicht mehr abgestützt, gegen das Aufbrechelement 8, es kommt zum Zerbrechen der Ampulle 3 und zum Freisetzen des Elektrolyten 2, der die Batteriezelle 9 sodann galvanisch aktiviert. Diese Bewegung der Ampulle 3 kann darüber hinaus noch durch das optionale Federelement 10 unterstützt werden, das sich während dieser Bewegung ebenfalls entspannt respektive die Ampulle 3 zusätzlich in Richtung des Aufbrechelements 8 beschleunigt.

Fig. 5 zeigt eine zweite Ausführungsform einer erfindungsgemäßen Aktivierungseinrichtung 1, wobei für gleiche Bauteile gleiche Bezugszeichen verwendet werden. Vorgesehen ist auch hier eine mit einem Elektrolyten 2 gefüllte Ampulle 3 sowie eine Einrichtung 4 zum Zerbrechen der Ampulle 3. Dargestellt ist ebenfalls die stapelförmige Batteriezelle 9, die über den Elektrolyten 2 galvanisch aktiviert werden kann.

Die Einrichtung 4 umfasst auch hier ein Schnappfederelement 5, das in gleicher Weise ausgebildet werden kann wie das vorstehend zu den Figuren 1 bis 4 beschriebene Schnappfederelement 5. Bei dieser Ausgestaltung ist das Schnappfederelement 5 jedoch oberhalb der Ampulle 3 positioniert. Es ist wiederum an einem Bauteil 6 der Aktivierungseinrichtung 1 angeordnet und in gleicher Weise in entsprechenden Aufnahmen 14 mit seinen Federabschnitten 13 eingespannt bzw. fixiert. Hier erstreckt sich das Bauteil 6, das natürlich entsprechende Durchbrechungen 16 aufweist (siehe Fig. 2), durch die der Elektrolyt 2 nach außen treten kann, seitlich bis über die Ampulle 3, so dass das Schnappfederelement 5 oberhalb desselben positioniert werden kann.

Am Schnappfederelement 5 sind bei dieser Alternative exemplarisch zwei Aufbrechelemente 17 ausgebildet bzw. vorgesehen, die zur Ampulle 3 gerichtet sind. Diese Aufbrechelemente 17 können an dem Schnappfederelement 5, das, wie auch das Schnappfederelement 5 aus den vorstehenden Figuren, beispielsweise aus Federstahl gefertigt ist, einstückig ausgebildet sein, beispielsweise in Form vorstehender Spitzen oder Kegel oder Ähnlichem. Sie können aber auch separat daran angeklebt oder angeschweißt sein.

Optional ist hier, gestrichelt dargestellt, ein Zusatzmasseelement 18 dargestellt, das auf dem Schnappfederelement 5 aufgesetzt sein kann und letztlich die Gesamtmasse, die bei einer Bewegung in Richtung der ausgezeichneten Bewegungsrichtung gemäß Pfeil A in Richtung des Pfeils B beschleunigt wird, vergrößert.

Kommt es nun zu einer nicht ordnungsgemäßen Beschleunigung, beispielsweise im Rahmen eines Falltests, so kommt es wiederum zu einem leichten Einfedern der Federabschnitte 13, das Schnappfederelement 5 ändert seine Relativposition bezüglich der positionsfest an dem Träger 7 fixierten Ampulle 3 nicht oder nur unwesentlich, die Aufbrechelemente 17 kommen nicht in Kontakt mit der Ampulle 3.

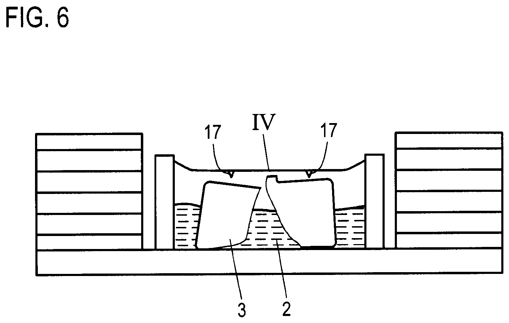

Wird jedoch das Geschoss ordnungsgemäß verschossen, so liegt eine hinreichende und lang andauernde Beschleunigung an, so dass insgesamt auf das Schnappfederelement 5 eine Kraft ausgeübt wird, die dazu führt, dass es in die zweite Form IV, siehe Fig. 6, umschnappt. Hierfür kann allein die Masse des Schnappfederelements 5 ausreichend sein, das heißt, dass in diesem Fall kein Zusatzmasseelement 18 vorgesehen ist. Denkbar ist es aber auch, zu einer weiteren Erniedrigung der Auslöseschwelle eben dieses Zusatzmasseelement 18 vorzusehen.

Kommt es zum Umschnappen, so schlagen die Aufbrechelemente 17 auf die Ampulle 3 oberseitig auf, es kommt zum Zerbrechen der Ampulle 3 und zum Freisetzen des Elektrolyten 2.

Wenngleich hier zwei Aufbrechelemente 17 vorgesehen sind, kann es bereits ausreichend sein, nur ein solches Aufbrechelement 17 oder mehr als zwei Aufbrechelemente 17 vorzusehen. Auch kann anstelle der Zusatzmasse 18, die am Schnappfederelement 5 beispielsweise angeklebt sein kann, auch die Masse des Schnappfederelements 5 selbst vergrößert werden, indem ein dickerer Mittelabschnitt 12 ausgebildet wird, an dem die Federabschnitte 13, die dann entsprechend dünner sind, radial abstehen.

Das Schnappfederelement 5 ist bevorzugt aus Federstahl als einfaches Stanzbauteil gefertigt, kann aber gleichermaßen auch aus einem hinreichend steifen Kunststoff gefertigt sein.

### Bezugszeichenliste

- 1: Aktivierungseinrichtung
- 2: Elektrolyt
- 3: Ampulle
- 4: Einrichtung zum Zerbrechen der Ampulle
- 5: Schnappfederelement
- 6: Bauteil
- 7: Träger
- 8: Aufbrechelement
- 9: Batteriezelle
- 10: Federelement
- 11: Gehäuse
- 12: Mittelabschnitt
- 13: Federabschnitt
- 14: Aufnahme
- 15: Durchbrechung
- 16: Durchbrechung
- 17: Aufbrechelement
- 18: Zusatzmasseelement

- A: Pfeil
- B: Pfeil

## Patentansprüche

1. Aktivierungseinrichtung für eine Batterie für einen elektronischen Zündmechanismus, umfassend eine mit einem Elektrolyten (2) gefüllte Ampulle (3) sowie eine Einrichtung (4) zum Zerbrechen der Ampulle (3),
**dadurch gekennzeichnet,**
**dass** die Einrichtung (4) zum Zerbrechen ein Schnappfederelement (5) umfasst, das bei Aufbringen einer beschleunigungsbedingten Kraft verformt wird und während der Verformung von einer ersten Form (I) mit Erreichen eines Umschnapppunkts schlagartig zum Zerbrechen der Ampulle in eine zweite Form (IV) umschnappt.

2. Aktivierungseinrichtung nach Anspruch 1,
**dadurch gekennzeichnet,**
**dass** das Schnappfederelement (5) ein die beschleunigungsbedingt bewegbare Ampulle (3) tragendes Lagerelement ist.

3. Aktivierungseinrichtung nach Anspruch 2,
**dadurch gekennzeichnet,**
**dass** unterhalb der Ampulle (3) ein Aufbrechelement (8) angeordnet ist, auf dem die Ampulle (3) nach Umschnappen des Schnappfederelements (5) in die zweite Form (IV) aufschlägt.

4. Aktivierungseinrichtung nach Anspruch 2 oder 3,
**dadurch gekennzeichnet,**
**dass** ein Federelement (10) vorhanden ist, über das die Ampulle (3) gegen das Schnappfederelement (5) gespannt ist.

5. Aktivierungseinrichtung nach Anspruch 4,
**dadurch gekennzeichnet,**
**dass** das Federelement (10) an der Oberseite der Ampulle (3) angreift und an einem die Ampulle (3) oberseitig übergreifenden Bauteil (11) abgestützt ist.

6. Aktivierungseinrichtung nach Anspruch 4 oder 5,
**dadurch gekennzeichnet,**
**dass** das Federelement (10) eine Schraubenfeder oder ein elastischer Materialblock ist.

7. Aktivierungseinrichtung nach Anspruch 1,
**dadurch gekennzeichnet,**
**dass** das Schnappfederelement (5) oberhalb der Ampulle (3) angeordnet ist und wenigstens ein beim Umschnappen von der ersten Form (I) in die zweite Form (IV) an der Ampulle (3) anschlagendes Aufbrechelement (17) aufweist.

8. Aktivierungseinrichtung nach Anspruch 7,
**dadurch gekennzeichnet,**
**dass** das Aufbrechelement (17) am Schnappfederelement (5) ausgeformt oder angebracht ist.

9. Aktivierungseinrichtung nach Anspruch 7 oder 8,
**dadurch gekennzeichnet,**
**dass** das Schnappfederelement (5) mit einem Zusatzmasseelement (18) versehen ist, das zusammen mit dem Schnappfederelement (5) beschleunigbar ist.

10. Aktivierungseinrichtung nach einem der vorangehenden Ansprüche,
**dadurch gekennzeichnet,**
**dass** das Schnappfederelement (5) einen Mittelabschnitt (12) sowie mehrere radial davon abstehende Federabschnitte (13) aufweist, über die das Schnappfederelement (5) an einer Wandung eines das Schnappfederelement (5) umgebenden Bauteils (6) abgestützt ist.

11. Aktivierungseinrichtung nach Anspruch 10,
**dadurch gekennzeichnet,**
**dass** drei oder mehr äquidistant um den Umfang des runden Mittelabschnitts (12) verteilt angeordnete Federabschnitte (13) vorhanden sind.

12. Aktivierungseinrichtung nach Anspruch 10 oder 11,
**dadurch gekennzeichnet,**
**dass** an dem Bauteil (6) eine oder mehrere Aufnahmen (14) für die Federabschnitte (13), die in die eine oder die mehreren Aufnahmen (14) eingreifen, vorhanden sind.

13. Aktivierungseinrichtung nach einem der vorangehenden Ansprüche,
**dadurch gekennzeichnet,**
**dass** das Schnappfederelement (5) aus Federstahl oder einem Polymer ist.

## Claims

1. Activation device for a battery for an electronic ignition mechanism, comprising an ampoule (3) filled with an electrolyte (2) and a device (4) for breaking the ampoule (3),
**characterized in that**
the device (4) for breaking comprises a snap-action spring element (5) which is deformed when an acceleration-induced force is applied, and during the deformation, upon reaching a snapping point, snaps abruptly from a first shape (I) to assume a second shape (IV) for breaking the ampoule.

2. Activation device according to Claim 1,
**characterized in that**
the snap-action spring element (5) is a bearing element supporting the ampoule (3) movable by acceleration.

3. Activation device according to Claim 2,
**characterized in that**
disposed below the ampoule (3) is a breaking element (8) on which the ampoule (3) impacts after the snap-action spring element (5) has snapped, so as to assume the second shape (IV).

4. Activation device according to Claim 2 or 3,
**characterized in that**
there is a spring element (10) by way of which the ampoule (3) is tensioned in relation to the snap-action spring element (5).

5. Activation device according to Claim 4,
**characterized in that**
the spring element (10) engages on the upper side of the ampoule (3) and is supported on a component (11) that extends over the upper side of the ampoule (3).

6. Activation device according to Claim 4 or 5,
**characterized in that**
the spring element (10) is a coil spring or an elastic material block.

7. Activation device according to Claim 1,
**characterized in that**
the snap-action spring element (5) is disposed above the ampoule (3) and has at least one breaking element (17), which strikes the ampoule (3) when snapping from the first shape (I) to the second shape (IV).

8. Activation device according to Claim 7,
**characterized in that**
the breaking element (17) is moulded on or attached to the snap-action spring element (5).

9. Activation device according to Claim 7 or 8,
**characterized in that**
the snap-action spring element (5) is provided with an additional-mass element (18) which is able to be accelerated conjointly with the snap-action spring element (5).

10. Activation device according to one of the preceding claims,
**characterized in that**
the snap-action spring element (5) has a central portion (12) and radially projecting therefrom a plurality of spring portions (13) by way of which the snap-action spring element (5) is supported on a wall of a component (6) surrounding the snap-action spring element (5).

11. Activation device according to Claim 10,
**characterized in that**
there are three or more spring portions (13) distributed equidistantly about the circumference of the round central portion (12).

12. Activation device according to Claim 10 or 11,
**characterized in that**
there are one or a plurality of receptacles (14) for the spring portions (13), which engage in the one or the plurality of receptacles (14), on the component (6).

13. Activation device according to one of the preceding claims,
**characterized in that**
the snap-action spring element (5) is made of spring steel or a polymer.

## Revendications

1. Dispositif d'activation pour une batterie pour un mécanisme d'allumage électronique, comprenant une ampoule (3) remplie d'un électrolyte (2) et un dispositif (4) destiné à rompre l'ampoule (3),
**caractérisé en ce**
**que** le dispositif (4) de rupture comprend un élément de ressort à enclenchement (5), qui est déformé lors de l'application d'une force liée à l'accélération et qui s'enclenche brutalement, lors de la déformation, d'une première forme (I) en atteignant un point d'enclenchement dans une deuxième forme (IV) pour rompre l'ampoule.

2. Dispositif d'activation selon la revendication 1, **caractérisé en ce**
**que** l'élément de ressort à enclenchement (5) est un élément de palier supportant l'ampoule (3) pouvant être déplacée en raison de l'accélération.

3. Dispositif d'activation selon la revendication 2, **caractérisé en ce**
**qu'**est disposé sous l'ampoule (3) un élément de rupture (8) que l'ampoule (3) vient frapper après l'enclenchement de l'élément de ressort à enclenchement (5) dans la deuxième forme (IV).

4. Dispositif d'activation selon la revendication 2 ou 3,
**caractérisé en ce**
**qu'**est présent un élément de ressort (10), par lequel l'ampoule (3) est tendue contre l'élément de ressort à enclenchement (5).

5. Dispositif d'activation selon la revendication 4, **caractérisé en ce**
**que** l'élément de ressort (10) s'engage sur le côté supérieur de l'ampoule (3) et prend appui sur un composant (11) surmontant le côté supérieur l'ampoule (3).

6. Dispositif d'activation selon la revendication 4 ou 5,
**caractérisé en ce**
**que** l'élément de ressort (10) est un ressort hélicoïdal ou un bloc de matériau élastique.

7. Dispositif d'activation selon la revendication 1, **caractérisé en ce**
**que** l'élément de ressort à enclenchement (5) est disposé au-dessus de l'ampoule (3) et comporte au moins un élément de rupture (17) frappant l'ampoule (3) lors de l'enclenchement de la première forme (I) dans la deuxième forme (IV).

8. Dispositif d'activation selon la revendication 7, **caractérisé en ce**
**que** l'élément de rupture (17) est formé ou installé sur l'élément de ressort à enclenchement (5).

9. Dispositif d'activation selon la revendication 7 ou 8,
**caractérisé en ce**
**que** l'élément de ressort à enclenchement (5) est pourvu d'un élément de masse supplémentaire (18), qui peut être accéléré conjointement avec l'élément de ressort à enclenchement (5).

10. Dispositif d'activation selon l'une des revendications précédentes,
**caractérisé en ce**
**que** l'élément de ressort à enclenchement (5) comporte une section centrale (12) ainsi que plusieurs sections de ressort (13) dépassant radialement de celle-ci, par lesquelles l'élément de ressort à enclenchement (5) prend appui sur une paroi d'un composant (6) entourant l'élément de ressort à enclenchement (5).

11. Dispositif d'activation selon la revendication 10, **caractérisé en ce**
**que** trois sections de ressort (13) ou plus réparties à équidistance autour de la périphérie de la section centrale (12) ronde sont présentes.

12. Dispositif d'activation selon la revendication 10 ou 11,
**caractérisé en ce**
**que** sont présents sur le composant (6) un ou plusieurs logements (14) pour les sections de ressort (13) qui viennent en prise avec les un ou plusieurs logements (14).

13. Dispositif d'activation selon l'une des revendications précédentes,
**caractérisé en ce**
**que** l'élément de ressort à enclenchement (5) est en acier à ressort ou en un polymère.
